(19) Europäisches Patentamt
European Patent Office
Office européen des brevets

(11) **EP 1 586 511 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**26.03.2025 Patentblatt 2025/13**

(45) Hinweis auf die Patenterteilung:
**16.06.2010 Patentblatt 2010/24**

(21) Anmeldenummer: 05007142.2

(22) Anmeldetag: **01.04.2005**

(51) Internationale Patentklassifikation (IPC):
**B29L 31/00** *(2006.01)*     **B29C 47/00** *(2006.01)*
**B29C 47/06** *(2006.01)*     **B29C 47/26** *(2006.01)*
**B65D 77/04** *(2006.01)*     **B29C 49/22** *(2006.01)*
**B65D 77/06** *(2006.01)*

(52) Gemeinsame Patentklassifikation (CPC):
**B65D 77/061; B29C 48/09; B29C 49/22;**
**B65D 77/0466;** B29C 48/21; B29C 48/335;
B29K 2995/0005; B29L 2031/7154; B65D 2213/02

(54) **Gegen elektrostatische Aufladungen geschützter Behälter**

Anti-static container and its method of manufacturing

Récipient antistatique et son procédé de fabrication

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **06.04.2004 DE 102004017326**

(43) Veröffentlichungstag der Anmeldung:
**19.10.2005 Patentblatt 2005/42**

(60) Teilanmeldung:
**10000094.2 / 2 181 935**

(73) Patentinhaber: **Schneider, Ekkehard, Dipl.-Ing.**
**57610 Altenkirchen (DE)**

(72) Erfinder: **Schneider, Ekkehard, Dipl.-Ing.**
**57610 Altenkirchen (DE)**

(74) Vertreter: **Geskes, Christoph et al**
**Geskes Patent- und Rechtsanwälte**
**Gustav-Heinemann-Ufer 74b**
**50968 Köln (DE)**

(56) Entgegenhaltungen:
**EP-A1- 1 354 816        EP-A1- 1 439 131**
**EP-A2- 0 313 066        EP-A2- 1 400 462**
**DE-A1- 10 013 000       DE-A1- 10 216 960**
**DE-U1- 20 107 962       DE-U1- 20 300 592**
**US-A1- 2002 176 991**

• **RUPPRECHT L ET AL: "CONDUCTIVE PLASTICS FOR MEDICAL APPLICATIONS", MEDICAL DEVICE AND DIAGNOSTIC INDUSTRY, CANON COMMUNICATIONS, SANTA MONICA, CA, US, January 1999 (1999-01-01), pages 1 - 7, XP002286594, ISSN: 0194-844X**

EP 1 586 511 B2

## Beschreibung

Die vorliegende Erfindung betrifft gegen elektrostatische Aufladungen geschützte Behälter für den Transport und/oder die Lagerung von fließfähigen Stoffen.

Behälter für den Transport und/oder die Lagerung von fließfähigen Stoffen, insbesondere Flüssigkeiten, finden in vielfältigen Ausgestaltungen Verwendung, beispielsweise als Fässer, IBC oder Schlingertanks. Diese Behälter werden üblicherweise aus Kunststoffmaterialien hergestellt. Bei derartigen Kunststoffbehältern besteht die Gefahr, daß infolge Reibung mit dem Füllgut die Behälteroberfläche eine elektrostatische Aufladung erfährt. Bei der Verwendung derartiger Behälter für Flüssigkeiten, deren Dämpfe leicht entzündlich sind, oder bei der Verwendung derartiger Behälter in Bereichen, die aus anderen Gründen als explosionsgefährdet einzustufen sind, besteht die Gefahr, daß durch eine Entladung der elektrostatischen Aufladung der Behälteroberfläche unter Funkenbildung eine Explosion ausgelöst werden kann.

Zur Vermeidung dieser Gefahr ist aus DE 202 06 436 U ein Behälter bekannt, der mit einer dauerantistatischen Außenschicht aus einem Kunststoff mit einem Leitrußanteil versehen ist. Damit sind elektrische Entladungen unter Funkenbildung zwischen dem Behälter und dem Untergestell und/oder dem Schutzgitter ausgeschlossen. Ein Nachteil dieses vorbekannten Behälters besteht darin, daß durch den Leitrußanteil in der Außenschicht gegebenenfalls auch in der Wandung des Behälters selbst infolge der Zumischung von leitrußhaltigen Kunststoffabfällen die Behälterwandungen undurchsichtig sind, so daß eine optische Füllstandskontrolle nicht möglich ist. Um eine derartige optische Füllstandskontrolle doch zu ermöglichen, ist ein aufwendiges Herstellungsverfahren vorgesehen, durch welches vorzugsweise in den Eckbereichen beim Extrusionsvorgang in dem aus im wesentlichen undurchsichtigen Kunststoffmaterial bestehenden schlauchförmigen Rohling ein Streifen aus durchscheinendem oder durchsichtigem Kunststoffmaterial eingebracht wird. Hierdurch besteht jedoch die Gefahr, daß bei der stofflichen Verbindung zwischen dem Sichtstreifenmaterial und dem angrenzenden undurchlässigen Kunststoffmaterial infolge von Inhomogenitäten nicht die gleiche Festigkeit erreicht wird wie in den übrigen Wandungsbereichen des Behälters.

Transport- und/oder Lagerbehälter aus Kunststoffen, beispielsweise Fässer, Tonnen, quaderförmige Behälter oder dergleichen werden für unterschiedliche Füllvolumen produziert und sind vielfach aus farbigen Kunststoffen hergestellt. Solche farbigen Behälter können aber nicht mit einer Leitruß enthaltenden äußeren Kunststoffschicht versehen werden, ohne die farbliche Optik zumindest zu beeinträchtigen. In der Regel ist die Leitruß enthaltende äußere Kunststoffschicht nahezu lichtundurchlässig und damit die Außenfläche schwarzfarbig.

EP 1 400 462 A2 offenbart einen Transport- und Lagerbehälter für Flüssigkeiten, wobei in den Körper eines Kunststoff-Innenbehälters elektrisch leitende Streifen aus einem Polyethylen hoher Dichte mit einem Leitrußanteil integriert sind, wobei elektrische Verbindungen zwischen der Innenfläche und der Oberfläche des Innenbehälters gebildet werden, deren Stärke der Wandstärke des Innenbehälters entsprechen.

DE 102 16 960 A1 offenbart eine gegen elektrostatische Aufladung geschützte Behälteranordnung für fließfähige Stoffe mit einem palettenartigen Untergestell aus einem elektrisch-leitfähigen Material und einem damit verbundenen Schutzgitter aus elektrischleitfähigem Material, dass die Seiten eines Kunststoffbehälters umschließt, dessen Wandungen durch die Herstellung im Koextrusionsverfahren aus mindestens zwei Schichten bestehen, wobei eine Basisschicht mit einer Außenschicht aus einem elektrischleitfähigen Kunststoffmaterial versehen ist und wobei die Außenschicht mit dem Untergestell und/oder dem Schutzgitter in elektrisch leitender Verbindung steht.

DE 203 00 592 U1 offenbart eine gegen elektrostatische Aufladung geschützte Transportpalette für eine Behälteranordnung zum Transport und Lagerung von fließfähigen Stoffen, die aus einem Kunststoffmaterial mit elektrisch-eigenleitenden (intrinsischen) Eigenschaften besteht.

EP 1 354 816 A1 offenbart einen IBC, wobei der Innenbehälter aus einem Kunststoffmaterial hergestellt ist, dessen äußere Oberfläche elektrisch-leitfähig durch die Zugabe von Füllstoffen gemacht wurde. Ebenso offenbart D 201 07 962 U1 eine Transport- und/oder Lagerungsvorrichtung, wobei die aus Kunststoff bestehenden Teile der Vorrichtung an ihrer Außenfläche mindestens eine elektrisch leitende Schicht aufweisen und elektrisch leitend miteinander verbunden sind, wobei die elektrische Leitfähigkeit durch Zugabe von Füllstoffen gegeben ist.

Schließlich offenbart EP 1 439 131 A1 (Dokument gemäß Art. 54(3) EPÜ) eine Behälteranordnung für den Transport und die Lagerung leicht entzündlicher, fließfähiger Stoffe als auch ein Verfahren zu seiner Herstellung, wobei diese Anordnung ein palettenartiges Untergestell aus einem elektrischleitfähigen Material und einem damit verbundenen Schutzgitter aus einem elektrischleitfähigen Material, das die Seitenwände des Behälters umschließt und dessen Wandungen durch die Herstellung im Blasverfahren aus wenigstens einer Schicht aus einem Kunststoffmaterial mit elektrisch eigenleitenden (intrinsischen) Eigenschaften gebildet sind, aufweist.

Der vorliegenden Erfindung liegt daher die Aufgabe zugrunde, einen gegen elektrostatische Aufladungen geschützten Behälter zur Verfügung zu stellen, der die vorstehend genannten Nachteile vermeidet und den an diesen gestellten Anforderungen hinsichtlich der Stabilität und Festigkeit nach den maßgeblichen Normen entspricht.

Diese Aufgabe wird erfindungsgemäß gelöst durch einen gegen elektrostatische Aufladungen geschützten Behälter für den Transport und/oder die Lagerung von fließfähigen Stoffen, dessen Wandungen mindestens einschichtig aufgebaut sind, wobei die mindestens eine Schicht ein erstes Kunststoffmaterial in einer Menge von 0,5 bis 50 Gew%, bezogen auf die gesamte Schicht, umfaßt, das einen mittleren spezifischen Widerstand von kleiner als $10^8$ $\Omega$, aufweist, wobei das erste Kunststoffmaterial als Basiskunststoff ein Homo-,Co-, Block-und/oder Ran-dompolymer umfasst, ausgewählt aus einer Gruppe umfassend Polyethylene und/oder Polypropylene, und weiterhin mindestens einen weiteren Kunststoff in einer Menge von 0,05 Gew% bis 2 Gew%, bezogen auf die Gesamtmenge des ersten Kunststoffmaterials (A), umfasst, der leitfähig ist, wobei der mittlere spezifische Widerstand der Schicht kleiner als 190 $\times$ $10^{15}$ $\Omega$ ist.

Unter dem mittleren spezifischen Widerstand im Sinne der vorliegenden Erfindung wird der spezifische Oberflächenwiderstand verstanden, berechnet gemäß DIN 53482 aus dem Oberflächenwiderstand $R_0$, bestimmt an aus dem betreffenden Kunststoffmaterial gepreßten Platten gemäß der folgenden Formel

$$\rho_s = \frac{d_m * \pi}{g} * R_0$$

wobei $d_m$ den mittleren Schutzspaltdurchmesser in der zur Bestimmung des gemessenen Oberflächenwiderstandes $R_o$ verwendeten Elektrodenanordnung angibt und hier 32 mm beträgt, g die Breite des Schutzspalts der zur Bestimmung verwendeten Elektrodenanordnung angibt und hier 6 mm beträgt, und ps den spezifischen Oberflächenwiderstand in $\Omega$ angibt. Zur Bestimmung des mittleren spezifischen Oberflächenwiderstandes wurden dabei die rechnerischen Mittelwerte aus wenigstens drei durchgeführten Messungen genommen.

Überraschenderweise hat sich gezeigt, daß bei Einsatz eines derartigen Kunststoffmaterials für die Herstellung der erfindungsgemäßen Behälter bereits keine antistatischen Aufladungen mehr auftreten und hierdurch auch Gefahrenstoffe, insbesondere leicht entflammbare oder ent-zündliche Gefahrenstoffe, sicher transportiert und gelagert werden können. Der Vorteil besteht insbesondere darin, daß das erste Kunststoffmaterial lichtdurchscheinend eingesetzt werden kann und eine Zumischung von bekannten leitfähigen Materialien wie Leitruß vermieden wird. Daher ist eine optische Füllstandskontrolle ermöglicht, da die Wandungen eines aus diesem ersten Kunststoffmaterial hergestellten Behälters allseitig lichtdurchscheinend ausgeführt sein können.

Ein weiterer Vorteil besteht darin, daß die Wandungen eines derartigen Behälters keinerlei Unterbrechungen ihrer stofflichen Zusammensetzung aufweisen und dementsprechend eine zuverlässige Eigenfestigkeit gegeben ist, welche insbesondere den an derartige Behälter gestellten Anforderungen und Normen auch entsprechen. Darüber hinaus ist es im Hinblick auf die für die Herstellung der erfindungsgemäßen Behälter notwendigen Gerätschaften, insbesondere Extruder und Blasformvorrichtungen, vorteilhaft, daß nach Abschluß einer Fertigung der erfindungsgemäßen Behälter diese ohne eine aufwendige Reinigung zur Herstellung sonstiger Behälter eingesetzt werden können.

Das erste Kunststoffmaterial umfaßt als Basiskunststoff, welcher nicht leitfähig ist, ein Homo-, Co-, Random- und/oder Blockcopolymer auf, ausgewählt aus einer Gruppe umfassend Polyethylen und/oder Polypropylen. Vorzugsweise ist der Basiskunststoff ein Highdensity-Polyethylen, weiter bevorzugt wird ein lineares High-density-Polyethylen mit 1 bis 5 Seitenketten auf 1000 Ketten Kohlenstoffatome eingesetzt. Unter Highdensity-Polyethylen wird insbesondere ein Polyethylen verstanden, welches eine Dichte in einem Bereich von etwa 0,94 bis etwa 0,965 g/cm$^3$, einen Schmelzpunkt in einem Bereich von etwa 120 bis 135 °C und eine Kristallinität in einem Bereich von etwa 70 bis etwa 85% aufweist.

Weiter weist das erste Kunststoffmaterial einen weiteren Kunststoff auf, der leitfähig ist. Dieser weist bevorzugt, gegebenenfalls nach einer Dotierung, eine Leitfähigkeit von mindestens etwa 1 S m$^{-1}$ auf. Der leitfähige Kunststoff kann dabei mit einem Elektronendonator oder einem Elektronenakzeptor dotiert sein. Der Elektronendonator oder Elektronenakzeptor ist vorzugsweise ausgewählt aus einer Gruppe umfassend Halogenide wie Fluoride, Bromide, Chloride oder Jodide und/oder schwefelhaltige Verbindungen, insbesondere Sulfonsäuren.

Vorzugsweise ist der weitere leitfähige Kunststoff ausgewählt aus einer Gruppe umfassend Polyacetylene, Polypyrole, Polythiophene, Polyaniline, Polyethylendioxithiophene (PEDOT), Polyphenylenvinylidene und/oder Polydialkylfluorene. Der Vorteil der Zugabe der vorgenannten leitfähigen Kunststoffe zu dem Basiskunststoff zur Bildung des ersten Kunststoffmaterials liegt insbesondere darin, daß hierdurch ein sehr homogenes Gemisch des ersten Kunststoffmaterials erhältlich ist, welches die Herstellung der erfindungsgemäßen Behälter in einer sehr homogenen Form, insbesondere mittels des Verfahrens des Blasformens, ermöglicht. Vorteilhaft insbesondere bei dem Einsatz von Polypyrolen und Polythiophenen bzw. deren Derivaten einschließlich PEDOT ist, daß diese nicht notwendigerweise eine Dotierung durch einen zusätzlich zugegebenen Elektronendonator oder Elektronenakzeptor benötigen, da diese bereits in einer dotierten Form originär herstellbar sind.

In einer besonders bevorzugten Ausführungsform des erfindungsgemäßen Behälters weist die mindestens eine die Wandung bildende Schicht ein weiteres, nichtleitfähiges Kunststoffmaterial auf, das einen mittleren spezifischen Widerstand von größer als 200 x $10^{15}$ $\Omega$ aufweist. Denn überraschenderweise hat sich herausgestellt, daß zur Sicherung gegen elektrostatische Aufladungen bereits die Zugabe einer auch geringen Menge des ersten Kunststoffmaterials zu einem nichtleichtfähigen Kunststoffmaterial sicherstellt, daß solche Aufladungen vermieden werden. Besonders vorteilhaft hieran ist insbesondere, daß die Verarbeitung des für die mindestens eine Schicht verwendeten sowie des weiteren nichtleitfähigen Kunststoffmaterials die Herstellung von erfindungsgemäßen Behältern ermöglicht, welche eine sehr homogene Wandungsstruktur aufweisen.

Besonders vorteilhaft ist dabei eine Ausführungsform, bei welcher das weitere, nichtleichtfähige Kunststoffmaterial einen zweiten Kunststoff aufweist, welcher ausgewählt ist aus einer Gruppe umfassend Homo-, Co-, Random- und/oder Blockcopolymere des Polyethylen und/oder Polypropylen. Besonders bevorzugt ist dabei eine Ausführungsform, bei welcher der Basiskunststoff des ersten Kunststoffmaterials chemisch identisch zu dem zwei ten Kunststoff des nichtleitfähigen Kunststoffmaterials ist. Chemisch identisch heißt dabei, daß die eingesetzten Kunststoffe die gleiche chemische Struktur aufweisen. Besonders bevorzugt ist dabei der Basiskunststoff und der zweite Kunststoff ein High-density-Polyethylen.

Erfindungsgemäß weist die Schicht das erste Kunststoffmaterial in einer Menge von 0,5 bis 50 Gew%, bezogen auf die gesamte Schicht, auf. Weiter bevorzugt weist die Schicht das erste Kunststoffmaterial in einer Menge in einem Bereich von etwa 3 bis etwa 30 Gew%, noch weiter bevorzugt in einem Bereich von etwa 15 bis etwa 25 Gew%, auf. Das erste Kunststoffmaterial selbst weist dabei den Basiskunststoff in einer Menge von mindestens 90 Gew%, weiter bevorzugt von mindestens 95 Gew%,, noch weiter bevorzugt von 98 Gew%, bezogen auf die Gesamtmenge des ersten Kunststoffmaterials, auf. Der leitfähige Kunststoff ist in dem ersten Kunststoffmaterial erfindungsgemäß in einer Menge von etwa 0,05 bis 2 Gew%, weiter bevorzugt von etwa 0,2 bis 2 Gew%, wiederum bezogen auf die Gesamtmenge des ersten Kunststoffmaterials, enthalten. Das erste Kunststoffmaterial liegt dabei insbesondere als Masterbatch vor.

Der mittlere spezifische Widerstand der Schicht selbst ist kleiner als $190 \times 10^{15} \Omega$, bevorzugt kleiner als $150 \times 10^{15} \Omega$, weiter bevorzugt kleiner als $100 \times 10^{15} \Omega$. In einer besonders bevorzugten Ausführungsform sind die Wandungen des erfindungsgemäßen Behälters mindestens dreischichtig aufgebaut, wobei die innenliegende mindestens eine Schicht das erste Kunststoffmaterial aufweist, wohingegen die Außen- und Innenschicht das erste Kunststoffmaterial, umfassend den leitfähigen Kunststoff, nicht aufweisen. Besonders bevorzugt ist eine Ausführungsform, in welcher der erfindungsgemäße Behälter aus drei Schichten aufgebaut ist. Die innenliegende Schicht weist dabei bevorzugt eine Mischung des ersten Kunststoffmaterials mit dem weiteren, nichtleitfähigen Kunststoffmaterial auf, wobei vorzugsweise das erste Kunststoffmaterial in einer Menge in einem Bereich von etwa 10 bis etwa 25 Gew%, bezogen auf die Gesamtmenge dieser Innenschicht, vorliegt. Die Außen- und die Innenschicht sind vorzugsweise ausschließlich aus dem weiteren Kunststoffmaterial gebildet. Bei dieser Ausführungsform ist besonders vorteilhaft, daß die solchermaßen aufgebauten erfindungsgemäßen Behälter hohe mechanische Eigenfestigkeiten durch die spezifische Ausbildung der Außen- und Innenschicht aufweisen. Schließlich kann eine gute Haftung der einzelnen Schichten untereinander erzielt werden insbesondere dann, wenn der Basiskunststoff und der zweite, nichtleichtfähige Kunststoff aus High-density-Polyethylen gebildet sind. Dabei kann zusätzlich bei der Herstellung der erfindungsgemäßen Behälter ein Haftvermittler vorgesehen werden. Grundsätzlich ergibt sich durch eine Mischung eines Basiskunststoffes zu dem leitfähigen Kunststoff im ersten Kunststoffmaterial der weitere Vorteil einer erheblichen Kostenreduzierung, da nur so viel leitfähiger Kunststoff beigemischt werden muß, daß die geforderte Ladungsdichte auf der Behälteroberfläche eingehalten werden kann. Bevorzugt beträgt die Ladungsdichte auf der Behälteroberfläche bis maximal 60 nCb/cm$^2$ (Nano-Coulomb pro Quadratzentimeter), weiter bevorzugt bis maximal 40 nCb/cm$^2$, noch weiter bevorzugt bis maximal bis 10 nCb/cm$^2$.

Des weiteren ist auch die Möglichkeit gegeben, aus farbigem Kunststoffmaterial herzustellende Transport- und/oder Lagerbehälter in EX-geschützter Ausführung herzustellen. Der leitfähige Kunststoff kann in farbigen Basiskunststoff unmittelbar eingemischt werden. Alternativ ist es insbesondere bei einer dreischichtigen Ausführung der Behälterwandungen auch möglich, daß nur die Innen- und die Außenwandung aus einem farbigen weiteren, nichtleitfähigen Kunststoffmaterial hergestellt werden. Es ist aber selbstverständlich auch möglich, nur eine durchsichtige äußere Schicht aus einer Mischung des ersten Kunststoffmaterials mit dem weiteren Kunststoffmaterial auf einer weiteren farbigen Schicht eines nichtleitfähigen Kunststoffmaterials aufzubringen, so daß die Farbe durchscheint.

Wird ein lediglich zweischichtiger Aufbau der Behälterwandungen gewünscht, so besteht hierbei vorzugsweise die Außenschicht aus einer Mischung des ersten Kunststoffmaterials mit dem weiteren Kunststoffmaterial. Hierdurch ist ebenso wie bei dem vorstehend beschriebenen dreischichtigen Aufbau vorteilhafterweise sichergestellt, daß das in dem erfindungsgemäßen Behälter transportierte oder gelagerte Gut mit hochreinem HDPE des nichtleitfähigen Materials ausschließlich in Kontakt steht und insbesondere die Gefahr vermindert wird, daß die die Leitfähigkeit erzeugenden Bestandteile des ersten Kunststoffmaterials durch das transportierte Gut, insbesondere Lösemittel, ausgelöst und hierdurch das transportierte Gut verunreinigt wird.

Bei einem zweischichtigen Aufbau kann die Außenschicht, umfassend das erste Kunststoffmaterial, gerade auch im Hinblick auf die an die erfindungsgemäßen Behälter gestellten Festigkeitsanforderungen sehr dünn ausgeführt werden, beispielsweise in einer Stärke von max. 1 mm, wobei diese Stärke auch in dem Eckenbereich der erfindungsgemäßen Behälter darunter liegen kann. Auch bei einer Ausführung mit einem dreischichtigen Aufbau kann die das erste Kunststoffmaterial aufweisende Zwischenschicht sehr dünn und damit kostensparend ausgeführt werden.

Die vorliegende Beschreibung betrifft weiterhin ein Verfahren zur Herstellung eines Behälters unter Verwendung eines leitfähigen Kunststoffes, wobei ein Anteil des ersten Kunststoffmaterials mit einem Anteil eines leitfähigen Kunststoffes und einem Anteil eines Basiskunststoffes in Form eines Masterbatches mit einem Anteil des weiteren, nichtleitfähigen Kunststoffmaterials gemischt und die Mischung einer Blasformmaschine zugeführt wird. Masterbatch im Sinne der vorliegenden Beschreibung bezeichnet eine Stammmischung eines leitfähigen Kunststoffes in einem Basiskunststoff, wobei der Gewichtsanteil am Basiskunststoff deutlich über demjenigen des leitfähigen Kunststoffes liegt, bezogen auf die Gesamtmenge. Durch die Vorlage der das erste Kunststoffmaterial bildenden Mischung aus einem leitfähigen Kunststoff und einem Basiskunststoff in Form eines Masterbatches wird vorteilhafterweise erzielt, daß der leitfähige Kunststoff bereits gleichmäßig verteilt in dem Basiskunststoff vorliegt. Dann kann auch bei der weiteren Vermischung dieses ersten Kunststoffmaterials mit dem weiteren Kunststoffmaterial und insbesondere bei Vorsehung hier chemisch identischer Basiskunststoffe und nichtleitfähiger Kunststoffe eine weitgehend homogene Verteilung des leitfähigen Kunststoffes in dieser Mischung erzielt werden, die eine gute weitere Verarbeitbarkeit insbesondere im Hinblick auf die Homogenität der herzustellenden Behälterwandungen ermöglicht. Die Mischung des ersten Kunststoffmaterials mit dem weiteren Kunststoffmaterial kann dabei in einem Extruder erfolgen oder aber auch in einer der eigentlichen Blasformmaschine vorgeschalteten Rührvorrichtung oder sogar von Hand. Überraschenderweise hat sich gezeigt, daß eine Vermischung durch Rührung in einer Rührvorrichtung oder sogar von Hand vorteilhaft gegenüber einer Mischung in einem Extruder ist.

Vorteilhafterweise wird das erste Kunststoffmaterial zur Bildung einer mittleren Schicht einer mehrschichtigen Wandung des im Blasformverfahren herzustellenden erfindungsgemäßen Behälters mit dem zur Bildung der tragenden Außen- und Innenschicht des weiteren, nichtleitfähigen Kunststoffmaterials als schlauchförmiger Rohling koextrudiert, welcher dann der Blasformmaschine zugeführt wird. Durch diese Maßnahme ist eine einwandfreie Verbindung zwischen der das erste Kunststoffmaterial enthaltenden Schicht und der Außen- und Innenschicht gewährleistet. Vorzugsweise wird dabei die Extrusion mit einer speziell ausgestalteten Ringdüse vorgenommen. Es ist gleichwohl auch möglich, mittels des Verfahrens erfindungsgemäße Behälter mit einer aus lediglich zwei Schichten aufgebauten Wandung herzustellen, wobei hier entsprechend dem Vorstehenden verfahren wird.

In vorteilhafter Ausgestaltung des Verfahrens ist ferner vorgesehen, daß das Masterbatch des ersten Kunststoffmaterials wenigstens einen als Haftvermittler in bezug auf den verwendeten Basiskunststoff wirkenden Zusatz enthält. Damit wird eine zuverlässige Verbindung zwischen der das erste Kunststoffmaterial enthaltenden Schicht und den weiteren Schichten bei einem mehrschichtigen Aufbau der Wandungen der erfindungsgemäßen Behälter beim Zusammenführen beider Kunststoffmaterialien in der Extruderdüse zur Bildung eines schlauchförmigen Rohlings noch verbessert.

Weiterhin wird vorteilhafterweise zur Herstellung der das erste Kunststoffmaterial enthaltenden Schicht zumindest teilweise aufgearbeitetes Kunststoffmaterial verwendet, das bei der Versäuberung der jeweils fertiggeformten Behälter anfällt, wobei das erste Kunststoffmaterial als Masterbatch nur noch in einer solchen Menge zugeführt wird, die für die Einhaltung eines vorgegebenen spezifischen Widerstandes und/oder einer vorgegebenen Leitfähigkeit erforderlich ist.

Bei Transport- und/oder Lagerbehältern, die in der bisherigen Technik mit einer elektrisch leitenden, mit Leitruß versetzten Außenschicht versehen waren, wurden die beim Versäubern anfallenden Abfälle in den Kunststoff zur Herstellung der an das Transportgut angrenzenden Schicht eingearbeitet. Dies hatte zur Folge, daß zum Schutz dieser Schicht gegen chemische Einwirkungen die so gebildete tragende Schicht noch zusätzlich mit einer chemisch widerstandsfähigen weiteren Innenschicht versehen werden mußte. Da gemäß der vorliegenden Erfindung der vom ersten Kunststoffmaterial umfaßte leitfähige Kunststoff nur in einem relativ geringen Anteil in der Außenschicht und/oder den Innenschichten bei einem zwei- bzw. dreischichtigen Aufbau enthalten ist, kann der bei der Versäuberung entstehende Abfall üblicherweise granuliert und nach Erfahrungswerten durch die weitere Zumischung von einem noch geringen Anteil des als Masterbatch vorliegenden ersten Kunststoffmaterials in bezug auf die Anforderungen an die Eigenleitfähigkeit entsprechend aufgebessert und erneut zur Herstellung der den leitfähigen Kunststoff aufweisenden Schicht verwendet werden. Hierdurch ergibt sich zum einen eine weitere Kostenersparnis und zum anderen den Vorteil, daß zur Herstellung der unmittelbar an das Transportgut angrenzenden Schicht des erfindungsgemäßen Behälters ein genuines, vorzugsweise fabrikationsfrisches, nichtleitendes weiteres Kunststoffmaterial, insbesondere High-density-Polyethylen, verwendet und dementsprechend eine zuverlässige Gewährleistung für die Festigkeit und Tragfähigkeit eines derartigen Behälters gegeben werden kann.

Diese und weitere Vorteile der vorliegenden Erfindung werden anhand der nachstehenden Fig. erläutert. Es zeigen:

Fig. 1 einen erfindungsgemäßen Behälter aus Kunststoff auf einem palettenartigen Untergestell mit Schutzgitter;

Fig. 2 einen Teilvertikalschnitt durch die Wandung eines zweischichtigen Kunststoffbehälters in größerem Maßstab; und

Fig. 3 das Herstellungsverfahren in Form eines schematischen Fließbildes.

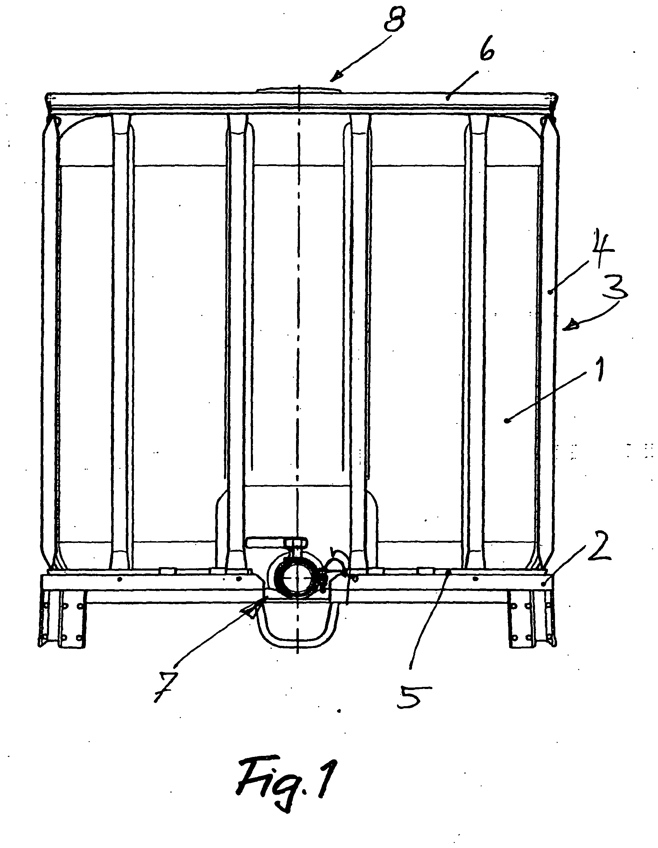

Fig. 1 zeigt eine typische Ausbildung des erfindungsgemäßen Behälters als sogenannten IBC. Der erfindungsgemäße Behälter kann jedoch auch jede andere Form und Ausgestaltung aufweisen. Die in Fig. 1 gezeigte Behälteranordnung weist einen Behälter 1 aus Kunststoff auf, der auf einem palettenartigen Untergestell 2, bevorzugt aus einem elektrisch leitfähigen Material, beispielsweise aus Stahl oder Kunststoff, aufsteht. Mit dem palettenartigen Untergestell 2 ist zum Schutz des Behälters 1 gegen mechanische Einwirkungen ein Schutzgitter 3 verbunden, das im wesentlichen aus einer Reihe von vertikalen Stäben 4 besteht, die jeweils im unteren Ende mit einem Rahmen 5 und im oberen Ende mit einem Rahmen 6 fest verbunden sind. Statt eines derartigen Stabgitters sind auch Schutzgitter mit sich kreuzenden Gitterstäben einsetzbar. Der Behälter 1 ist in Höhe seines Bodens mit einem Ablaufventil 7 versehen. Die Behälterdecke ist mit einem Einfüllstutzen versehen, der beispielsweise mittels eines Schraubdeckels 8 verschließbar ist.

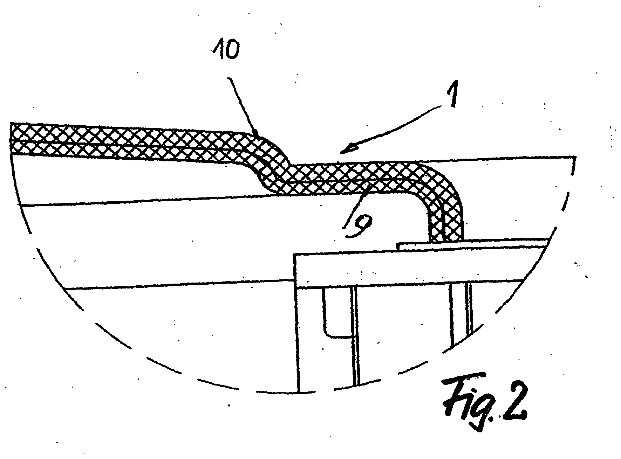

In Fig. 2 ist in vergrößerter Darstellung ein Teilschnitt durch die Behälterwandung dargestellt. Wie Fig. 2 entnommen werden kann, ist die Wandung des Behälters 1 zweischichtig aufgebaut, und zwar mit einer Innenschicht 9 aus dem weiteren, nichtleitfähigen Kunststoffmaterial, hier High-density-Polyethylen, und einer die Innenschicht 9 umschließenden Außenschicht 10, welche aus einer Mischung des ersten Kunststoffmaterials, umfassend den leitfähigen Kunststoff, mit dem weiteren Kunststoffmaterial besteht. Dabei wird für die Herstellung der Außenschicht als Basiskunststoff und zweiter Kunststoff des ersten bzw. weiteren, nichtleitfähigen Kunststoffmaterials, ebenfalls High-density-Polyethylen verwendet. Aufgrund der Koextrusion der Innenschicht 9 und der Außenschicht 10, wobei zusätzlich ein Haftvermittler der die Außenschicht 10 bildenden Mischung zugesetzt ist, ist die Außenschicht 10 mit der Innenschicht 9 fest und homogen verbunden.

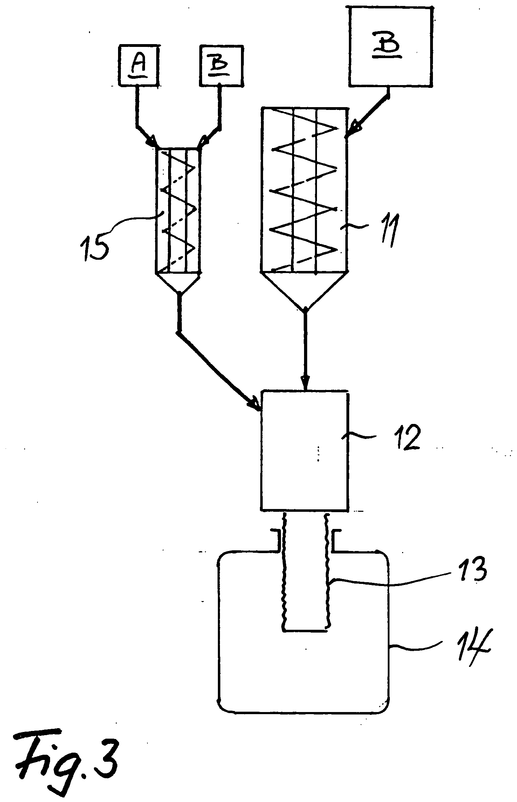

Wie aus dem in Fig. 3 schematisch wiedergegebenen Fließbild ersichtlich, wird der zweischichtige Kunststoffbehälter 1, wie in Fig. 2 gezeigt, im Wege des Blasextrusionsverfahrens hergestellt. Hierbei wird das einem Hauptextruder 11 zugeführte weitere, nichtleichtfähige Kunststoffmaterial B aufgeschmolzen und einer Ringdüse 12 zugeführt, in der ein schlauchförmiger Rohling 13 erzeugt wird, der dann in eine Glasform 14 eingegeben und zu einem Behälter umgeformt wird. Dabei kann zur Herstellung einer hier nicht gezeigten dreischichtigen Wandung auch vorgesehen sein, daß ein weiterer Hauptextruder 11 vorgesehen wird, welcher dann über eine getrennte Zuleitung der Ringdüse 12 derart verfügt, daß durch die beiden Hauptextruder eine Außen- und eine Innenschicht gebildet werden, welche eine Zwischenschicht umfassen, die leitfähigen Kunststoff aufweist.

Zur Herstellung der als Außenschicht auf den schlauchförmigen Rohling aufzubringenden Mischung aus dem ersten und dem weiteren, nichtleitfähigen Kunststoffmaterial wird bei der in Fig. 3 gezeigten Herstellung eines zweiwandigen Kunststoffbehälters das erste Kunststoffmaterial A, welches den leitfähigen Kunststoff umfaßt, einem zweiten Extruder 15 zugeführt. Zusätzlich wird weiteres, nichtleitfähiges Kunststoffmaterial B ebenfalls dem Extruder 15 über eine getrennte Zuleitung zugeführt. Dabei wird das Kunststoffmaterial A als Masterbatch vorgelegt. Zusätzlich kann auch vorgesehen werden, daß die Kunststoffmaterialien A und B zunächst vor Eingabe in den Extruder 15 mittels einer Rührvorrichtung oder von Hand vermischt werden, um hier eine hochhomogene Verteilung des im ersten Kunststoffmaterial A enthaltenen leitfähigen Kunststoffes zu erzielen. Das erste, den leitfähigen Kunststoff aufweisende Kunststoffmaterial A wird dabei in der gewünschten Menge, insbesondere bei einer volumetrischen Dosierung, entweder bereits der vorgeschalteten und in Fig. 3 nicht gezeigten Rührvorrichtung oder aber dem Extruder 15 zugeführt. Die Kunststoffmaterialien A und B werden im Extruder 15 homogen vermischt und aufgeschmolzen, wobei der Extruder 15 in bezug auf Druck und Temperatur so eingestellt ist, daß der im Kunststoffmaterial A enthaltene leitfähige Kunststoff nicht chemisch verändert wird.

Durch die homogene Vermischung der Kunststoffmaterialien A und B im Extruder 15 entsteht eine Mischung, die als vorzugsweise dünne Außenschicht in der Ringdüse 12 auf das die Innenschicht bildende Kunststoffmaterial B aufgebracht wird, wobei ein homogener Verbund zwischen beiden Kunststoffschichten entsteht. Der so gebildete zweischichtige schlauchförmige Rohling 13 wird dann in der Blasform 14 in die gewünschte Behälterform umgeformt.

Die Stärke der Außenschicht muß so bemessen werden, daß am fertigen Behälter in den blastechnischen Problemzonen wie insbesondere den Eckbereichen eine Mindestschichtdicke erhalten bleibt. Bevorzugt wird das erste Kunststoffmaterial A in einer Menge von etwa 15 bis etwa 25 Gew%, bezogen auf die Gesamtmenge der aus dem ersten und dem weiteren, nichtleitfähigen Kunststoffmaterial gebildeten Mischung, in diese eingebracht. Als leitfähiger Kunststoff kann dabei insbesondere der unter der Marke "PermaStat" vertriebene Kunststoff der RTP Company, Winona, USA, Verwendung finden. Derartig hergestellte Behälter weisen für die den leitfähigen Kunststoff enthaltende Schicht einen mittleren spezifischen Widerstand von etwa 50 bis 80 · $10^{15}$ Ω auf.

Wird, wie bevorzugt vorgesehen, ein helles, lichtdurchscheinendes High-density-Polyethylen als Ba-

siskunstoff für die Innenschicht und/oder Außenschicht bei einem dreischichtigen Aufbau des erfindungsgemäßen Behälters sowie als zweiter Kunststoff in dem weiteren, nichtleichtfähigen Kunststoffmaterial verwendet, so kann es zweckmäßig sein, die das erste Kunststoffmaterial aufweisende Außen- bzw. Innenschicht geringfügig einzufärben, so daß eine optisch einfach nachprüfbare Garantie dafür gegeben werden kann, daß die den leitfähigen Kunststoff aufweisende Außenschicht des erfindungsgemäßen Behälters diesen vollflächig umschließt. Der maximal mögliche Grad der Einfärbung ergibt sich aus der Anforderung, daß die Wandungen des beschichteten Behälters nicht durchscheinend sein müssen, damit eine allseitige optische Füllstandskontrolle möglich ist. Da die Abfälle aus der Versäuberung des fertigen Behälters als Granulat aufgearbeitet und bei der Herstellung des ersten Kunststoffmaterials A wiederverwertet werden können, besteht durch die Einfärbung keinerlei Nachteil.

Bei der Verwendung von Abfällen aus der Endbearbeitung werden diese dem Extruder 15 anstelle von dem weiteren, nichtleitfähigen Kunststoffmaterial B zugeführt, wobei dann bei der Aufbereitung der Abfälle durch entsprechende Prüfung von Proben, beispielsweise durch Leitfähigkeitsmessungen, aber insbesondere auch durch Überprüfung mit UV-Licht, zumindest qualitativ überprüfbar ist, daß leitfähiger Kunststoff vorhanden ist. Zweckmäßig ist es dabei, wenn bei der Aufbereitung von Abfällen die anfallenden Mengen in größeren Partien gesammelt und beispielsweise in Form eines Granulats homogenisiert werden. Bei einem dreischichtigen Aufbau werden leitfähigen Kunststoff enthaltende und sonstige Abfälle als Ersatz insbesondere des Basiskunststoffes dem ersten Kunststoffmaterial A zugeführt.

## Patentansprüche

1. Gegen elektrostatische Aufladungen geschützter Behälter (1) für Transport und/oder Lagerung von fließfähigen Stoffen, dessen Wandungen mindestens einschichtig aufgebaut sind, wobei die mindestens eine Schicht ein erstes Kunststoffmaterial (A) in einer Menge von 0,5 Gew.% bis 50 Gew.%, bezogen auf die gesamte Schicht, umfasst, das einen mittleren spezifischen Widerstand von kleiner als $10^8 \, \Omega$ aufweist, wobei das erste Kunststoffmaterial (A) als Basiskunststoff ein Homo-, Co-, Block- und/oder Randompolymer, ausgewählt aus einer Gruppe umfassend Polyethylene und/oder Polypropylene, umfasst, und weiterhin mindestens einen weiteren Kunststoff in einer Menge von 0,05 Gew% bis 2 Gew%, bezogen auf die Gesamtmenge des ersten Kunststoffmaterials (A), umfasst, der leitfähig ist, wobei der mittlere spezifische Widerstand der Schicht kleiner als $190 \times 10^{15} \, \Omega$ ist.

2. Behälter gemäß Anspruch 1, **dadurch gekenn-**

**zeichnet, dass** der Basiskunststoff ein High-density-Polyethylen ist.

3. Behälter gemäß einem der vorhergehenden Ansprüche, **dadurch gekennzeichnet, dass** der weitere, leitfähige Kunststoff, gegebenenfalls nach einer Dotierung, eine Leitfähigkeit von mindestens $1 \, S \, m^{-1}$ aufweist.

4. Behälter gemäß einem der vorhergehenden Ansprüche, **dadurch gekennzeichnet, dass** der leitfähige Kunststoff mit einem Elektronendonor oder mit einem Elektronenakzeptor dotiert ist.

5. Behälter gemäß Anspruch 4, **dadurch gekennzeichnet, dass** der Elektronendonor oder Elektronenakzeptor ausgewählt ist aus einer Gruppe umfassend Halogenide und/oder schwefelhaltige Verbindungen.

6. Behälter gemäß einem der vorhergehenden Ansprüche, **dadurch gekennzeichnet, dass** der weitere leitfähige Kunststoff ausgewählt ist aus einer Gruppe umfassend Polyacetylene, Polypyrole, Polythiophene, Polyaniline, Polyethylendioxithiophene, Polyphenylenvinylidene und/oder Polydialkylfluorene.

7. Behälter gemäß einem der vorhergehenden Ansprüche, **dadurch gekennzeichnet, dass** die mindestens eine Schicht ein weiteres, nicht leitfähiges Kunststoffmaterial (B) umfasst, das einen mittleren spezifischen Widerstand von größer als $200 \times 10^{15} \, \Omega$ aufweist.

8. Behälter gemäß Anspruch 7, **dadurch gekennzeichnet, dass** das weitere nichtleitfähige Kunststoffmaterial (B) einen zweiten Kunststoff aufweist, ausgewählt aus einer Gruppe umfassend Homo-, Co-, Block- und/oder Randompolymere des Polyethylen und/oder Polypropylen.

9. Behälter gemäß Anspruch 8, **dadurch gekennzeichnet, dass** der Basiskunststoff des ersten Kunststoffmateriales (A) und der zweite Kunststoff des weiteren Kunststoffmaterials (B) chemisch identisch sind.

10. Behälter gemäß einem der vorhergehenden Ansprüche, **dadurch gekennzeichnet, dass** die Wandungen des Behälters mindestens dreischichtig aufgebaut sind, wobei die innenliegende mindestens eine Schicht das erste Kunststoffmaterial (A) aufweist, wohingegen die Außen- und Innenschicht das erste Kunststoffmaterial (A) nicht aufweisen.

11. Behälter gemäß einem der vorhergehenden Ansprüche, **dadurch gekennzeichnet, dass** die Wandungen des Behälters lichtdurchlässig sind.

## Claims

1. An anti-static container (1) for the transport and / or storage of flowable substances, the walls of which has walls are made up of at least one layer,

   wherein the at least one layer comprises a first plastic material (A) in an amount of 0.5 % by weight to 50 % by weight, with respect to the entire layer, said first plastic material (A) having an average specific resistance of less than $10^8$ $\Omega$,
   wherein the first plastic material (A) comprises as a basic plastic material, a homopolymer, copolymer, block polymer, and / or random polymer that is selected from a group that includes polyethylenes and / or polypropylenes, and further comprises at least one further plastic material in an amount of 0.05 % by weight to 2 % by weight, with respect to the total amount of the first plastic material (A), said at least one further plastic material being conductive,
   wherein the average specific resistance of the layer is less than $190 \times 10^{15}$ $\Omega$.

2. The container according to claim 1, **characterised in that** said basic plastic material is a high-density polyethylene.

3. The container according to any of the preceding claims, **characterised in that** said further, conductive plastic material, whether or not after doping, has a conductivity of at least 1 S m$^{-1}$.

4. The container according to any of the preceding claims, **characterised in that** said conductive plastic material is doped with an electron donor or with an electron acceptor.

5. The container according to claim 4, **characterised in that** said electron donor or electron acceptor is selected from a group that includes halides and / or sulfur-containing compounds.

6. The container according to any of the preceding claims, **characterised in that** said further, conductive plastic material is selected from a group that includes polyacetylenes, polypyrroles, polythiophenes, polyanilines, polyethylene dioxithiophenes, polyphenylene vinylidenes and / or polydialkyl fluorenes.

7. The container according to any of the preceding claims, **characterised in that** the at least one layer comprises one further, non-conductive plastic material (B) which has an average specific resistance of greater than $200 \times 10^{15}$ $\Omega$.

8. The container according to claim 7, **characterised in that** said further, non-conductive plastic material (B) comprises a second plastic material selected from a group that includes homopolymers, copolymers, block polymers, and / or random polymers of polyethylene and / or polypropylene.

9. The container according to claim 8, **characterised in that** said basic plastic material of the first plastic material (A) and the second plastic material of the further plastic material (B) are chemically identical.

10. The container according to any of the preceding claims, **characterised in that** the walls of the container are made up of at least three layers,

    wherein the inner at least one layer comprises the first plastic material (A),
    whereas the outer layer and the inner layer do not comprise the first plastic material (A).

11. The container according to any of the preceding claims, **characterised in that** the walls of the container are translucent.

## Revendications

1. Récipient antistatique (1) pour le transport et / ou le stockage de substances fluides, dont les parois sont réalisées avec au moins une couche,

   dans lequel la au moins une couche comprend un premier matériau synthétique (A) en une quantité de 0,5 % en poids à 50 % en poids, par rapport à la couche totale, ledit premier matériau synthétique (A) présentant une résistance spécifique moyenne inférieure à $10^8$ $\Omega$,
   dans lequel le premier matériau synthétique (A) comprend, en tant que matériau synthétique de base, un homopolymère, un copolymère, un polymère bloc et / ou un polymère statistique, sélectionné dans un groupe qui inclut les polyéthylènes et / ou les polypropylènes, et comprend, en outre, au moins un matériau synthétique supplémentaire en une quantité de 0,05 % en poids à 2 % en poids, par rapport à la quantité totale du premier matériau synthétique (A), ledit au moins un matériau synthétique supplémentaire étant conducteur,
   dans lequel la résistance spécifique moyenne de la couche est inférieure à $190 \times 10^{15}$ $\Omega$.

2. Récipient selon la revendication 1, **caractérisé en ce que** le matériau synthétique de base est un polyéthylène à haute densité.

3. Récipient selon l'une quelconque des revendications précédentes, **caractérisé en ce que** ledit matériau synthétique supplémentaire étant conducteur, le cas échéant à la suite d' un dopage, présente une conductivité d' au moins 1 S m⁻¹.

4. Récipient selon l'une quelconque des revendications précédentes, **caractérisé en ce que** ledit matériau synthétique étant conducteur est dopé avec un donneur d' électrons ou avec un accepteur d' électrons.

5. Récipient selon la revendication 4, **caractérisé en ce que** le donneur d' électrons et / ou l'accepteur d' électrons sont sélectionnés dans un groupe qui inclut des halogénides et / ou des composés riches en soufre.

6. Récipient selon l'une quelconque des revendications précédentes, **caractérisé en ce que** ledit matériau synthétique supplémentaire étant conducteur est sélectionné dans un groupe qui inclut des polyacétylènes, des polypyroles, des polythiophènes, des polyanilines, des polyéthylènes dioxithiophènes, polyphénylènes vinylidènes et / ou des polydialkyls fluorènes.

7. Récipient selon l'une quelconque des revendications précédentes, **caractérisé en ce que** ladite au moins une couche comporte un matériau synthétique (B) supplémentaire étant non conducteur qui présente une résistance spécifique moyenne supérieure à $200 \times 10^{15}$ Ω.

8. Récipient selon la revendication 7, **caractérisé en ce que** ledit matériau synthétique (B) supplémentaire étant non conducteur comprend un deuxième matériau synthétique sélectionné dans un groupe qui inclut des homopolymères, des copolymères, des polymères bloc et / ou des polymères statistique du polyéthylène et / ou du polypropylène.

9. Récipient selon la revendication 8, **caractérisé en ce que** ledit matériau synthétique de base du premier matériau synthétique (A) et ledit deuxième matériau synthétique du matériau synthétique (B) supplémentaire sont chimiquement identiques.

10. Récipient selon l'une quelconque des revendications précédentes, **caractérisé en ce que** les parois du récipient sont réalisées avec au moins trois couches,

dans lequel la au moins une couche située à l'intérieur comprend le premier matériau synthétique (A),
tandis que la couche extérieure et la couche intérieure ne comprennent pas le premier matériau synthétique (A).

11. Récipient selon l'une quelconque des revendications précédentes, **caractérisé en ce que** les parois du récipient laissent passer la lumière.

Fig.1

Fig. 2

**Fig.3**

**EP 1 586 511 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20206436 U
- EP 1400462 A2
- DE 10216960 A1

- DE 20300592 U1
- EP 1354816 A1
- EP 1439131 A1